# EUROPEAN PATENT SPECIFICATION

(11) **EP 2 806 628 B1**
(45) Date of publication and mention of the grant of the patent: **11.07.2018**
(21) Application number: 13168647.9
(22) Date of filing: 22.05.2013
(51) Int. Cl.: H04N 5/32, H04N 5/363, H04N 5/374, H04N 5/378

(54) **A radiographic image detecting apparatus comprising operational amplifiers**
Röntgenabbildungs-Erkennungsvorrichtung mit Operationsverstärkern
Appareil de détection d'image radiographique comprenant des amplificateurs opérationnels

(43) Date of publication of application: 26.11.2014
(73) Proprietor: Agfa HealthCare, 2640 Mortsel (BE)
(72) Inventor: Sevenhans, Jan, 2640 Mortsel (BE); Pandelaers, Patrick, 2640 Mortsel (BE); Lambrechts, Patrick, 2640 Mortsel (BE)
(74) Representative: Verbrugghe, Anne Marie L.

(56) References cited:
- US-A1- 2003 042 406
- US-A1- 2007 045 552
- KARIM K S ET AL: "ALTERNATE PIXEL ARCHITECTURES FOR LARGE AREA MEDICAL IMAGING", PROCEEDINGS OF SPIE - INTERNATIONAL SOCIETY FOR OPTICAL ENGINEERING, S P I E - INTERNATIONAL SOCIETY FOR OPTICAL ENGINEERING, US, vol. 4320, 18 February 2001 (2001-02-18), pages 35-46, XP008013846, ISSN: 0277-786X, DOI: 10.1117/12.430903

## Description

### Field of the Invention

The present invention generally relates to a pixel unit for a radiographic image detecting apparatus, preferably a direct digital radiographic image detecting apparatus.

### Background of the Invention

The invention concerns a radiographic image detecting apparatus used for medical diagnosis, such as for example by detecting and providing an X-ray image of a patient. Currently flat panel X-ray detectors are available that make use of digital radiography. This means that the X-ray image can be generated without requiring the use of a photographic film. In a direct digital radiographic image detecting apparatus, the flat panel detector is able to send the X-ray image directly to the image processing equipment for example by means of a wired or wireless communication interface. Such a radiographic image detecting apparatus makes use of a plurality of pixel units, each comprising a radiation detector that generates an electric charge upon reception of radiation emitted by a radiographic image radiation source.

Such a system is for example known from US2011/0278465A1. This system improves the quality of the signal from the radiation detecting pixels by reducing the effect of kTC noise (k: Boltzmann's constant; T temperature; C: capacitance of the readout bus) by means of correlated double sampling. However this technique requires an additional signal processing circuit, additional control lines and thus complicates design and increases the required processing power.

In such flat panel X-ray detectors attempts were made to anneal the amorphous Thin Film Transistors (TFT's) using Low Temperature Polycrystalline Silicon (LTPS) LASER techniques to increase the mobility of the amorphous silicon and achieve an increased transconductance in the TFT's. The microcrystalline TFT channel controlled by the gate was leaky as the gate oxide suffered from the cracks at the borders of the resulting grains of recrystallization. Additionally voltage gain in such voltage mode active pixels is limited because of the low mobility, and thus low gain, that is associated with the amorphous silicon TFT's and the cracks in the gate oxide of the LTPS TFT's cause to much leakage, and thus dark current, in the pixel.

It is a goal of the current invention to provide an alternative and improved radiographic image detecting apparatus that is able to reduce the effect of kTC noise which overcomes the above mentioned drawbacks, with a simple design and without the need for an increase in processing power. It is further desired to reduce the time needed to transfer the readout signal from the pixel unit to the readout signal processor.

Several publications disclose Passive Pixels Sensors having common features with the present invention.

For example, in a publication by Karim K S et al: "Alternate pixel architectures for large area medical imaging" , Proceedings of SPIE - International Society for Optical Engineering, SPIE - International Society for Optical Engineering, US, vol. 4320, 18 Feb. 2001, pages 35-46 a radiographic image detecting apparatus having all the features of the preamble of claim 1, is disclosed.

Further US 2003/042406 discloses a radiation image detecting apparatus having a plurality of pixel units and a plurality of operational amplifiers each of the operational amplifiers selectively connectable to a corresponding set of the pixel units. The composition of a pixel unit differs from the current invention.

US 2007/045552 likewise discloses a radiographic image detecting apparatus comprising a plurality of pixel units and a plurality of operational amplifies each of them being selectively connectable to a corresponding set of pixel units. The composition of the pixel units in this patent application also differs from that of te present invention.

However, the disclosed detecting apparatus do not solve the problems of the present invention.

### Summary of the Invention

According to a first aspect of the invention, there is provided a radiographic image detecting apparatus comprising a plurality of pixel units and a plurality of operational amplifiers, each of said operational amplifiers selectively connectable to a corresponding set of the pixel units,
Said pixel unit comprising:
- a radiation detector configured to generate electric charge upon reception of radiation emitted by a radiographic image radiation source;
- a bias line configured to provide a bias voltage relative to a ground plane when connected to a bias voltage output line of a bias voltage supply, the bias line being connected to the radiation detector; and
- a pixel switch connected to the radiation detector, a driving line and a readout line, the pixel switch configured to operate in function of a driving signal received from the driving line such that the switch:
   - during an integration time period, disconnects the radiation detector from the readout line, such that the electric charges generated by the radiation detector are accumulated;
   - during a readout time period, connects the radiation detector to the readout line such that the accumulated electric charges generated by the radiation detector produce a readout signal,

The operational amplifier comprising:
- A non-inverting input connected to a ground plane;
- An inverting input configured to be connected to the readout lines of the corresponding set of the pixel units during the readout time period for receiving the readout signal;
- An output configured to produce an output signal on an output line in function of the received readout signal;
CHARACTERIZED IN THAT
the radiographic image apparatus further comprises:
- At least one input reset switch respectively associated with each operational amplifier, connected to the readout line of one or more corresponding pixel units, the ground plane and a reset line, and the input reset switch configured to operate in function of a reset signal received from the reset line such that the input reset switch:
   - in a reset state, connects the readout line of one or more of the corresponding pixel units to the ground plane; and
   - in a non-reset state, disconnect the readout line of one or more of the corresponding pixel units from the ground plane,
- At least one output reset switch respectively associated with each operational amplifier, connected to the bias line of one or more corresponding pixel units, the bias voltage output line of the bias voltage source, the output of the associated operational amplifier and a reset line, and the output reset switch configured to operate in function of a reset signal received from the reset line such that the output reset switch:
   - in a reset state, connects the bias line of one or more of the corresponding pixel units to the bias voltage output line of the bias voltage source and disconnects this bias line from the output of the associated operational amplifier; and
   - in a non-reset state, disconnects the bias line of one or more of the corresponding pixel units from the bias voltage output line of the bias voltage source and connects this bias line to the output of the associated operational amplifier,
   the radiographic image apparatus further being configured to operate according to an operating cycle comprising a reset time period and a subsequent non-reset time period, the non-reset time period comprising the integration time period and subsequent the readout time period,
- the input reset switch and the output reset switch further being configured to operate in the reset state during the reset time period and in the non-reset state during the non-reset time period.

The impact of kTC noise on the output signal in the output line as the pixel unit, during the readout time period will be put in the feedback path of the operational amplifier. The kTC noise caused by the resistance of the readout lines will in this way be superposed to the output signal of the amplifier instead of the input signal. In this way the noise contribution will be reduced approximately by the gain of the operational amplifier. With a prior art radiographic image apparatus a current needed to flow from the pixel unit through the readout line to a capacitor in the negative feedback path of the operational amplifier, which in addition to the noise impact, lead to delays during readout of the pixel unit. Thus the relative impact on the readout signal of the kTC noise injected in the readout line, the amount of which is determined mainly by the capacitance of the readout line, will thus be reduced with at least the gain of the operational amplifier as determined largely by the ratio of the impedance of the pixel unit and the impedance of the readout lines. Furthermore as the pixel unit is put directly in the negative feedback path by means of the reset switches, thus providing the voltage on the pixel unit itself as a suitable value for the operational amplifier to produce an output signal, this results in the output signal being available with a decreased delay as no longer a current needs to flow from the readout line to the feedback path before suitable output signal can be produced. This radiographic image detecting apparatus will thus be able to provide images with a higher quality as the impact of kTC noise in the readout lines on the output signal will be reduced and thus the sensitivity and precision of the current pixel unit can be increased and further the necessary readout time period can be shortened leading to higher frequency image capture capabilities.

According to an embodiment the radiation detector comprises a photo-electric detector.

Such a detector is suitable to convert radiation from the radiographic image source to electric charges.

According to a further embodiment the photo-electric detector comprises a PIN photodiode configured to detect X ray photons.

Such a PIN photodiode is particularly suitable for conversion of X ray radiation to electric charges and can be manufactured as a microelectronic component. the corresponding set of the pixel units.

According to a further preferred embodiment the PIN photo diode is connected with its cathode to the bias line and with its anode to the pixel switch, and in that the bias voltage is a predetermined positive voltage.

This further simplifies the design and connection of the microelectronic components forming the pixel unit and arrangement of a plurality of these pixel units in the radiographic image detecting apparatus.

According to a further embodiment the operational amplifier comprises an operational transimpedance amplifier, preferable a sample and hold operational transimpedance amplifier.

This allows for a simple, low noise implementation of the amplifier that does not require any additional components as during the readout time period the ratio of the impedance of the readout lines and the impedance of the pixel unit largely determine the gain of the amplifier.

According to still a further embodiment the pixel switch comprises a Thin Film Transistor that is connected with:
- its gate to the driving line;
- its source to the readout line;
- its drain to the radiation detector.

This allows to implement the pixel switch in the pixel unit itself on the same substrate as the radiation detector.

According to a preferred embodiment there is one input reset switch associated with each operational amplifier, connected to the readout lines of all corresponding pixel units, these readout lines further being directly connected to the inverting input of the operational amplifier.

This allows for sharing the input reset switch over the set of pixel units, for example a column of pixel units. This further allows to arrange the input reset switch in the crystalline CMOS analogue ASIC that comprises the readout signal controller instead of on the substrate comprising the pixel units. This further also improves the yield during production of the radiographic image detecting apparatus as such a minimal number of active elements leads to a low risk of production related failures. Additionally this also results in a power advantage as a minimal number of such active elements need to be provided with suitable control signals.

According to an embodiment the input reset switch comprises a MOSFET Transistor that is connected with:
- its gate to the reset line;
- its source to the ground plane;
- its drain to these readout lines and the inverting input of the operational amplifier.

In this way a simple implementation is realized with a minimal number of electronic elements.

According to a preferred embodiment there is one output reset switch associated with each operational amplifier, connected to the bias lines of all corresponding pixel units.

The same advantages as mentioned for sharing the input reset switch also hold for this arrangement of the output reset switch. Especially, when both the input reset switch and the output reset switch are shared across the set of pixel units an especially advantageous embodiment is realized.

According to an embodiment the output reset switch comprises a first MOSFET Transistor and a second MOSFET Transistor,
the first MOSFET Transistor being connected with:
- its inverted gate to the reset line;
- its source to the output of the operational amplifier;
- its drain to these bias lines,
the second MOSFET Transistor being connected with:
- its gate to the reset line;
- its source to the drain of the first Thin Film Transistor and these bias lines;
- its drain to the bias voltage output line.

In this way a simple implementation is realized with a minimal number of electronic elements.

According to an alternative embodiment each pixel unit comprises one input reset switch directly connected or connected via the pixel switch to the readout line of this pixel units, this readout line further being connected to the inverting input of the operational amplifier.

This embodiment allows for arranging the input reset switch directly on the substrate together with the other elements of the pixel unit, thus allowing for a modular configuration. Such an arrangement offers scalability without the necessity for a redesign, as for example the power requirements for such an input reset switch will remain the same independently of the number of pixel units the specific radiographic image apparatus comprises.

According to an embodiment the input reset switch comprises a Thin Film Transistor that is connected with:
- its gate to the reset line;
- its source to the ground plane;
- its drain directly or via the pixel switch to these readout lines and the inverting input of the operational amplifier.

In this way a simple implementation is realized with a minimal number of electronic elements.

According to a preferred embodiment each pixel unit comprises one output reset switch, connected to the bias line of its pixel unit.

The same advantages as mentioned for arranging the output reset switch in individual pixel units also hold for this arrangement of the output reset switch. Especially, when both the input reset switch and the output reset switch are arranged in the individual pixel units an especially advantageous embodiment is realized with respect to scalability of the radiographic image detecting apparatus.

According to an embodiment the output reset switch comprises a first Thin Film Transistor and a second Thin Film Transistor,
the first Thin Film Transistor being connected with:
- its gate to the reset line;
- its source to the output of the operational amplifier;
- its drain to the bias lines of its pixel unit,
the second Thin Film Transistor being connected with:
- its gate to the reset line;
- its source to the drain of the first Thin Film Transistor and the bias line of its pixel unit;
- its drain to the bias voltage output line.

In this way a simple implementation is realized with a minimal number of electronic elements.

According to a further embodiment the plurality of pixel units are arranged in a plurality of rows and columns, the image detecting apparatus comprising a plurality of the driving lines and a plurality of the readout lines, the driving lines each being connected to a plurality of pixel units of a single row and each of the readout lines each being connected to a plurality of pixel units of a single column, and the corresponding set of the pixel units comprising a set of pixels units of a single column.

Such an arrangement allows the operational amplifier to be associated with the crystalline CMOS analogue ASIC that comprises the readout signal controller.

### Brief Description of the Drawings

Figure 1 schematically illustrates the use of a radiographic image detection apparatus according to the invention;
Figure 2 schematically illustrates the main components of the radiographic image detection apparatus comprising a plurality of pixel units according to an embodiment of the invention;
Figures 3 and 4 schematically illustrate a pixel unit and a corresponding amplifier according to specific embodiments of that of Figure 2;
Figure 5 schematically illustrates some of the signals during an operating cycle of the embodiment of Figures 2 to 4;
Figures 6A - 6C and 7 schematically illustrate an alternative embodiment to that of Figures 2 to 4 of the radiographic image detection apparatus; and
Figures 8 schematically illustrates a further alternative embodiment to that of Figure 7.

### Detailed Description of Embodiment(s)

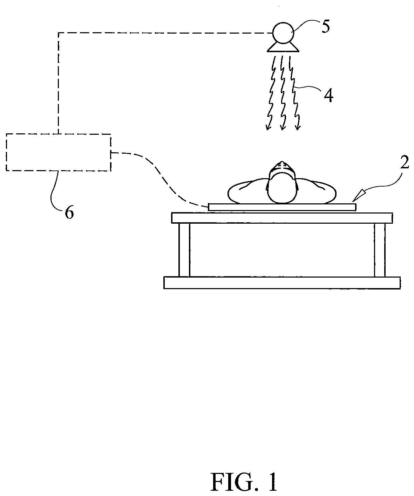

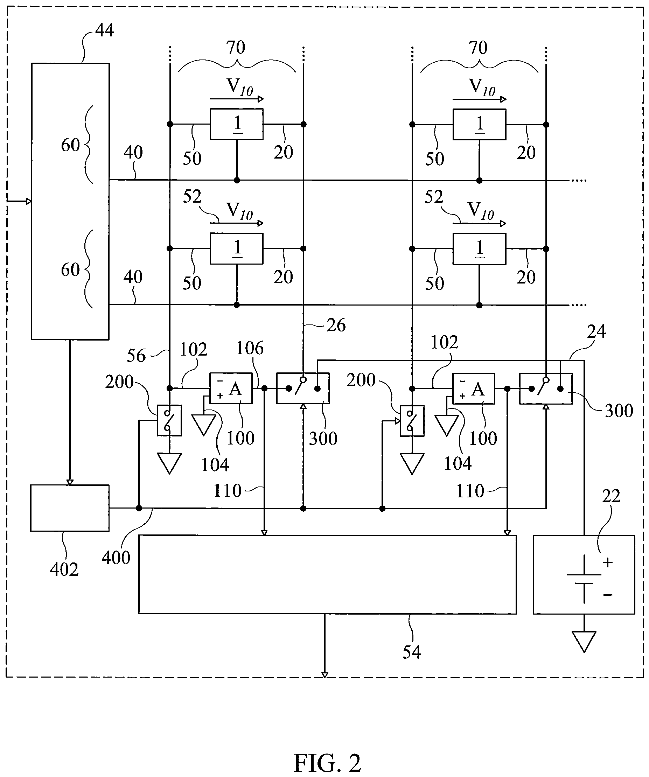

As shown in Figure 1, the radiographic image detection apparatus 2 is placed below a patient which is for example lying on a suitable bed or table. The radiographic image detection apparatus 2 during image capture receives radiation 4 from a radiation source 5 as instructed by the controller of a radiographic image system 6. According to this embodiment of the invention the radiation source 5 emits X-rays 4, however, it is clear that alternative radiation sources 5 emitting alternative radiation such as for example alpha rays, beta rays, gamma rays, electron beams, ... could be used when combined with a suitable radiographic image detection apparatus 2. The intensity of the X-rays 4 are detected by a plurality of pixel units 1, as shown in more detail in Figure 2, each comprising a radiation detector 10 configured to generate electric charge 3 upon reception of the radiation 4 emitted by the radiation source 5. The electric charges 3 of these pixels 1 subsequently generate a readout signal that is processed by the circuitry of the radiographic image detection apparatus 2 in order to generate a, preferably digital, representation of the generated radiographic image, that is suitable to be processed by further medical image processing modules for storage, further processing or displaying of the medical image by the radiographic image system 6 and/or a hospital information system.

As shown in Figures 2 - 5, the radiographic image detecting apparatus 2 comprises a plurality of pixel units 1 arranged in a plurality of rows 60 and columns 70. The pixel units 1 that are arranged in a same row 60 are connected to a driving line 40 for receiving a driving signal 42 from a drive signal controller 44. The pixel units 1 upon reception of the driving signal 42 produces a readout signal 52 that is provided via a readout line 50 and an amplifier 100 to a readout signal controller 54. The readout signal 52 is a voltage value V10 between the readout line 50 and a bias line 20. As will be explained below in further detail, there is selectively provided a bias voltage relative to a ground plane to this bias line 20 when it is connected to a bias voltage output line 24 of a bias voltage supply 22 that supplies a suitable direct current voltage. As shown in Figure 2, the bias lines 20 of a plurality of pixel units 1 of a single column 70 are all connected to this bias voltage output line 24 via an output reset switch 300. The bias lines 20 of the pixel units 1 of a single column could, as shown, are connected to the output reset switch 300 via a common bias column bus 26. Similarly all the readout lines 50 of the pixel units 1 of a single column 70 are connected to an input reset switch 200 via a common readout column bus 56. As shown each of these columns 70 also comprises an operational amplifier 100. The non-inverting input 102 of this operational amplifier 100 is connected to a ground plane. The inverting input 104 is connected to the readout bus 56 and thus to the readout lines 50 of the pixel units 1 of the corresponding column 70. The output 106 of the operational amplifier 100 is connected via the output reset switch to the bias column bus 26 and thus the bias lines of the pixel units 1 of the corresponding column 70. As will be explained in further detail below, during a readout time period Tr the readout signal 52 can in this way be presented in the negative feedback path F of the operational amplifier 100 between the inverting input 104 and the output 106. This enables the operational amplifier 100 to produce at its output an output signal 112 in function of the received readout signal 52. This output signal 112 is then subsequently provided to the readout signal controller 54 for further processing via an output line 110. In this way the readout column bus 56 of each of the columns 70 feeds a readout signal 52 produced by the electric charges 3 generated by a radiation detector 10 of a pixel unit 1 of that column 70 selected by the drive signal 42 on its driving line 40 to a readout signal controller 54. This readout signal 52 is then processed by the readout signal controller 54 to a form suitable for further digital communication or processing techniques allowing the radiographic image to be efficiently transferred to the radiographic image system 6, for example by means of a suitable wired or wireless transceiver. The radiographic image system 6 could then further comprise an image processor, input devices such as pointers or a keyboard for receiving input operations from an operator and a display for displaying the radiographic image. Further both the input reset switch 200 and the output reset switch 300 are connected to a reset line 400 for receiving a reset signal 402. This reset signal 402 will determine the operational state of both the input reset switch 200 and the output reset switch 300 as will explained in further detail below. As shown in Figures 2 - 5 the reset signal 402 can be provided by the drive signal controllers 44 in a coordinated manner with respect to the driving signals 42.

It is clear that according to particular embodiments a plurality of driving signal controllers 42 controlling a predetermined number of the driving lines 40 could be provided, and equally a plurality of readout signal controllers 54 each receiving a predetermined plurality of output lines 106. The driving signal controller 44 or the readout signal controller 54 according to a specific embodiment may be implemented as an Application Specific Integrated Circuit (ASIC), however alternatively any other suitable controller technology could be used. In one particular example there is provided a radiographic image detection apparatus 2 is dimensioned about 43,18cm (17 inch) by 35.56cm (14 inch), comprising a matrix of pixel units 1 arranged in 3456 rows by 2880 columns. This particular embodiment comprises 15 driving signal controllers 44, each controlling 216 driving lines 40; and 16 readout signal controllers 54, each receiving 192 output lines 110. Although in the schematic representation of the embodiment of Figures 2 - 5, the operational amplifier 100 and the input reset switches 200 and the output reset switches 300 are shown as distinct elements from the readout signal controller 54, according to a particular embodiment, they could be implemented such that they are comprised within the readout signal controller 54.

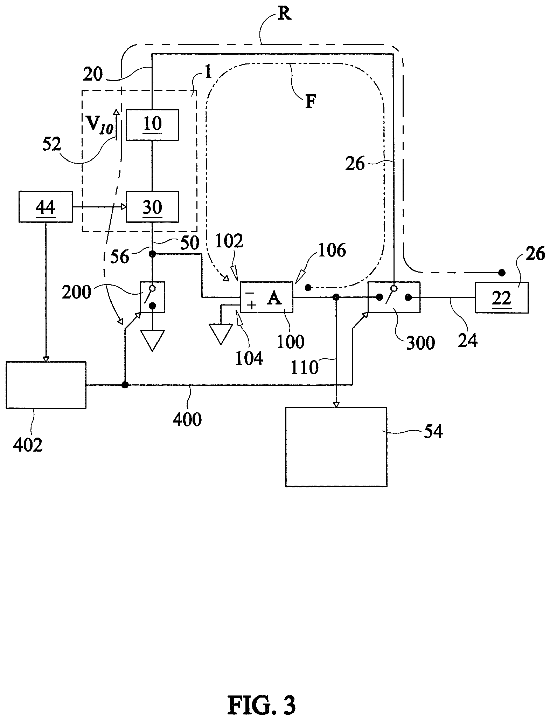

The components of a single pixel unit 1 for the radiographic image detecting apparatus 2 of Figure 2 are schematically shown in more detail in Figure 3. The bias line 20 of the pixel unit 1 is connected to one side of the radiation detector 10. The radiation detector 10 preferably comprises a photo-electric detector 10, however any other suitable radiation detector 10 configured to generate electric charge 3 upon reception of radiation 4 emitted by a radiographic image radiation source 5 could be used. In order to convert the radiation 4 to a wavelength more suitable for the photo-electric detector 10, the photo-electric detector 10 could optionally cooperate with a scintillator which can be made of fluorescent material that converts the radiation 4 from the radiation source 5 into radiation in a spectrum more suited for the PIN photodiode 10. The scintillator in this way could for example convert X-ray radiation to electromagnetic radiation with a wavelength of 300nm to 800nm which corresponds to the spectrum of visible light. Alternatively the photo-electric detector 10 could generate electric charges 3 directly from the received radiation 4. The pixel unit 1 further comprises a pixel switch 30. This pixel switch 30 is connected between the radiation detector 10 and the readout line 50. As already explained with reference to Figure 2, the bias line 20 of the pixel unit 1 is connected via the bias column bus 26 to an output reset switch 300 and the readout line 50 is connected via the readout column bus 56 to the inverting input 102 of the operational amplifier 100 and the input reset switch 200.

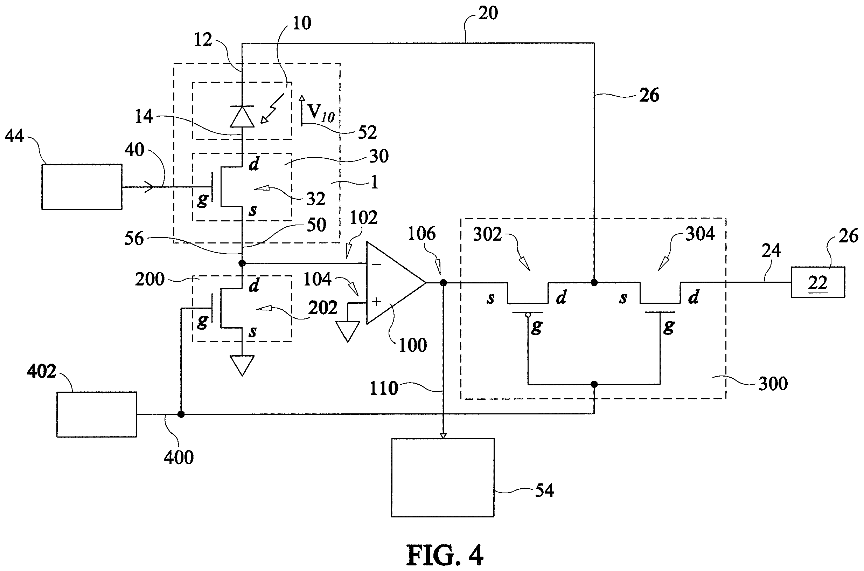

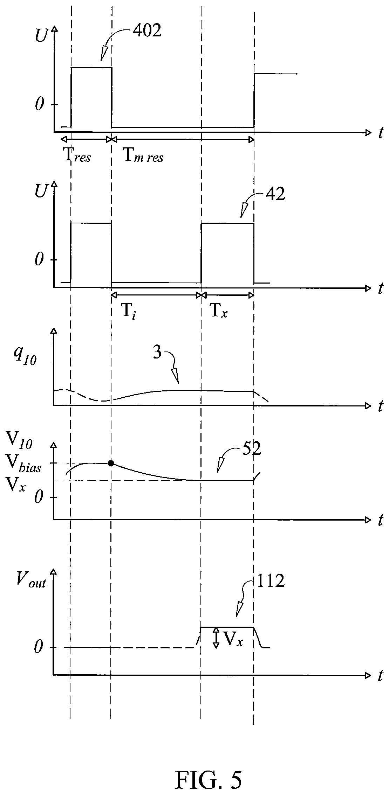

Although in Figures 3 and 4 only a single pixel unit 1 and a single operational amplifier 100 is shown, it is clear that the operation of the input reset switches 100 and output reset switches 300 of other corresponding operational amplifiers 100 is the similar when successively handling readout signals 52 of their corresponding set of pixel units 1. The input reset switch 200, as explained with reference to Figure 2 is connected via the readout column bus 56 to the readout line 50 of its corresponding pixel units 1. The input reset switch 200 is further also connected to the ground plane and a reset line 400. The operation of the input reset switch 200 is determined by a reset signal 402 received from the reset line 400. This reset signal 402 is for example generated by the driving signal controller 44 in synchronism with the driving signal 42 provided on the driving line 40 of the pixel unit 1 as will be explained in further detail below. Based on this reset signal 402 the input reset switch 200 is selectively operated in a reset state and a non-reset state. In the reset state the input reset switch 200 connects the readout column bus 56, and thus the readout lines 50 of the corresponding pixel units 1 to the ground plane. This also means that the inverting input 102 of the operational amplifier 100 is connected to the ground plane in the reset state of the input reset switch 200. In the non-reset state the input reset switch 200 disconnects the readout column bus 56 and thus all readout lines 50 of the corresponding pixel units 1 from this ground plane. This also means that the inverting input 102 of the operational amplifier 100 is disconnected from the ground plain in the non-reset state of the input reset switch 200. The output reset switch 300, as explained with reference to Figure 2, is connected to the bias column bus 26 and thus to all bias lines 20 of the corresponding pixel units 1. The output reset switch 30 is further also connected to the bias voltage output line 24 of the bias voltage source 26, the output 106 of the associated operational amplifier 100 and the reset line (400). The output reset switch 300 is operated in function of the reset signal 402 received from the reset line 400. Based on this reset signal 402 the output reset switch 300 is selectively switched between a reset state and a non-reset state. In the reset state the output reset switch 300 connects the bias column bus 26 and thus the bias lines 20 of the corresponding pixel units 1 to the bias voltage output line 24 of the bias voltage supply 22. Additionally in this reset state the output reset switch 300 disconnects the bias column bus 26 and thus the bias lines 20 of the corresponding pixel units from the output 106 of the associated operational amplifier 100. In the non-reset state the output reset switch 300 disconnects the bias column bus 26 and thus the bias lines 20 of the corresponding pixel units 1 from the bias voltage output line 24 of the bias voltage supply 22. Additionally in this non-reset state the output reset switch 300 connects the bias column bus 26 and thus the bias lines 20 of the corresponding pixel units 1 to the output 106 of the associated operational amplifier 100. This thus means that when both the input reset switch 200 and the output reset switch 300 is operated by the reset signal 402 on the reset line 400 in the reset state, the readout column bus 56 will be connected to the ground plane and the bias column bus 26 will be connected to the bias voltage output line 24 of the bias voltage source 22. In this reset state the bias voltage Vbias will thus be applied to the bias line of the corresponding pixel units 1 while their readout line 50 is connected to the ground plane, thus forming a reset path R. As will be explained in further detail with reference to Figures 4 and 5, it is necessary for this bias voltage Vbias to be the voltage V10 applied to the radiation detector 10 that according to this embodiment in this reset state of both the input reset switch 200 and the output reset switch 300, also the pixel switch 30 is in a closed state so that the bias voltage Vbias is applied to the radiation detector 10 so that the electric charges 3 accumulated during a previous measurement can be disgarded. In the reset state, since both the inverting input 102 and the non-inverting input 104 of the operational amplifier 100 are connected to the ground plane, which corresponds to the a reference voltage value of 0V, the output signal 112 generated at the output 106 of the operational amplifier 100 will also be at this reference voltage value of 0V. When both the input reset switch 200 and the output reset switch 300 are in the non-reset state, the pixel unit 1 is connected between the inverting input 102 and the output 106 of the operational amplifier 100 and thus forms the negative feedback path F for this operational amplifier 100.

A specific embodiment of the elements of the radiographic image detecting apparatus 2 shown in Figure 3 is shown in Figure 4. The radiation detector 10 is a photo-electric detector 10 in the form of a PIN photodiode 10 that is capable of detecting X ray photons. As shown the PIN photo diode 10 is connected with its cathode 12 to the bias line 20 and with its anode 14 to the pixel switch (30). In such a configuration the PIN Photo diode 10 is able to cooperate with a bias voltage supply 22 that provides a bias voltage Vbias that is a predetermined positive voltage with respect to the ground plane, for example +10V or any other suitable value. This allows the PIN diode to be implemented as a microelectronic component with the anode 14 facing away from the substrate 200. This is advantageous as in that way the received X ray photons can be converted to electric charges with minimal signal degradation. Such a PIN photodiode 10 is particularly suited to detect radiation 4 from X ray photons, however any other suitable photo-electric detector 10 could be provided as a possible alternative embodiment. As further shown in Figure 4 the pixel switch 30 can be formed by means of a suitable transistor, for example a suitable Thin Film Transistor 32 that can be arranged on the same micro-electronic substrate as the PIN photo diode 10. The Thin Film Transistor 32 of the pixel switch 30 is connected with its gate to the driving line 40, its source to the readout line 50 and its drain to the radiation detector 10. The Thin Film Transistor 32 operates in an "ON" state or closed state when a predetermined positive voltage is applied as a drive signal 42 to its gate. In this closed state the pixel switch 30 connects the anode 14 of the PIN photodiode 10 to the readout line 50 of the pixel unit 1 and thus also to the inverting input 102 of the operational amplifier 100 and the input reset switch 200. When a negative voltage, for example -7V or any other suitable value, is applied to the gate of this Thin Film Transistor 32 it will operate in an "OFF" state or open state and disconnect the anode 14 of the PIN photodiode 10 from the readout line 50 of the pixel unit 1. As further shown in Figure 4, the input reset switch 200 comprises a transistor 202, preferably a MOSFET Transistor 202 that allows to implement the input reset switch 200 on the same micro-electronic substrate as the operational amplifier 100 or the readout signal controller 54. The MOSFET Transistor 202 is connected with its gate to the reset line 400, its source to the ground plane, its drain to the readout column bus and thus the readout lines 50 of the corresponding pixel units 1, and the inverting input 102 of the operational amplifier 100. When a predetermined positive voltage is applied as a reset signal 402 to the reset line the MOSFET transistor 202 will be in an "ON" state and connect the readout column bus 56 and the inverting input 102 of the operational amplifier 100 to the ground plane. When a negative voltage is applied to the gate of the MOSFET transistor 202 it will switch to an "OFF" state in which it disconnects the readout column bus 56 and the inverting input 102 of the operational amplifier 100 from the ground plane. As further shown in Figure 4, the output reset switch 300 comprises a complementary pair of Transistors, preferably a complementary pair of MOSFET Transistors 302, 304 as this also allows the output reset switch 300 to be implemented on the same micro-electronic substrate as the operational amplifier 100 or the readout signal controller 54. This complementary pair of MOSFET Transistors 302, 304 comprising a first MOSFET Transistor 302 and a second MOSFET Transistor 304. The first MOSFET Transistor 302 is connected with its inverted gate to the reset line 400, its source to the output 106 of the operational amplifier 100, its drain to the bias column bus 26 and thus to the bias lines 20 of the corresponding pixel units 1. The second MOSFET Transistor 304 is connected with its gate to the reset line 40, its source to the drain of the first MOSFET Transistor 302 and the bias column bus 26, its drain to the bias voltage output line 24. When a predetermined positive voltage is applied as a reset signal 402 on the reset line 400 to the gates of the complementary MOSFET pair 302, 304, the first MOSFET transistor 302 will be in an "OFF" state and the second MOSFET transistor 304 will be in an "ON" state, thus connecting the bias column bus 26 to the bias voltage output line 24 of the bias voltage supply 22 and disconnecting the bias column bus from the output 106 of the operational amplifier 100. When a negative voltage is applied, the first MOSFET transistor 302 will be in an "ON" state and the second MOSFET transistor 304 will be in an "OFF" state, thus disconnecting the bias column bus 26 from the bias voltage output line 24 of the bias voltage supply 22 and connecting the bias column bus 26 to the output 106 of the operational amplifier 100. Although the inverted gate of MOSFET transistor 302 could be realised by using a p-MOS transistor that is complementary to an n-MOS transistor 304 as shown in Figure 4, according to an alternative embodiment the transistor 302 could also be realised as an n-MOS transistor, but then its gate should be preceded by a separate inverter, for example a generally known inverter circuit with MOSFET transistors.

An operating cycle of the embodiment of the radiographic image detection apparatus 2 of Figure 4 is shown in Figure 5. As shown, such an operating cycle comprises a reset time period Tres and a subsequent non-reset time period Tnres. During the reset Time period, the positive voltage value of for example +10V of the reset signal 402 provided by the reset line 400 to the input reset switch 200 and the output reset switch 300 will put them in their reset state. As further shown also the drive signal 42 on the drive line 40 will put the Thin Film Transistor 32 of the pixel switch 30 in the closed state during the reset time period Tres. This will cause the anode 14 of the PIN diode 10 to be connected to the ground plane and the cathode 12 of the PIN diode 10 to be connected to the bias voltage Vbias of the bias voltage source 22, thus forming the reset path R. This will result in any electrical charges 3 present in the reverse biased PIN diode 10 to flow away and the voltage V10 across the PIN diode 10 to rise to the Vbias value of for example +10V. As explained above, because during the reset time period Tres both the inverting input 102 and the non-inverting input 104 are connected to the ground plane the output signal 112 provided on the output line 110 by the output 106 of the operational amplifier 100 will consequently have the same reference voltage value of 0V. The reset time period Tres is subsequently followed by a non-reset time period Tnres during which both the input reset switch 200 and the output reset switch 300 are both in their non-reset state because they receive a reset signal 402 on the reset line that has a negative voltage value of for example -7V. In this non-reset state as explained above the pixel unit 1 is put in the negative feedback path F of the operational amplifier 100 as it is connected between its inverted input 102 and its output 106. As further shown in Figure 5 the non-reset time period Tnres comprises an integration time period Ti and subsequent readout time period. During the integration time period Ti the pixel switch 30 of the pixel unit 1 receives a driving signal 42 on its gate that operates it in an open state, for example a positive voltage value of +10V. As the pixel switch 30 is operated in its open state the PIN diode 10 of the radiation detector 10 is disconnected from the readout line 50. Upon reception of radiation 4 of the radiation source 5 the electric charges 3 generated by will be accumulated in the reverse polarized PIN diode and this will cause the voltage value V10 across the PIN diode 10 to start dropping from Vbias to a lower voltage value Vr at the end of the integration time period Ti, for example from +10V to +9V. As the input reset switch 200 is in its non-reset state during the integrate time period Ti and also the negative feedback path F of the operational amplifier 100 between the inverted input 102 and the output 106 is open as also the pixel switch 30 is in its open state the output voltage at the output 100 can be floating, however during the integration time period the output signal 112 is not processed by the readout signal controller 54. As further shown in Figure 5, during the subsequent readout time period Tr the pixel switch 30 is operated in a closed state and connects the PIN diode 10 of the radiation detector 10 to the readout line 50. The readout signal 52 in the form of the voltage value V10 over the PIN diode 10 which dropped to the voltage value Vr at the end of the integration time period Ti by means of the accumulated electric charges 3 generated by the PIN diode in this way is provided to the operational amplifier in its negative feedback path F between its inverted input 102 and its output 106. During the readout time period Tr the operational amplifier 100 functions as an operational transimpedance amplifier, the amplification factor A of which is approximately equal to the ratio of the equivalent capacitance of the readout column bus 56, which is positioned between the ground plane and the inverting input 102 and which is for example 100pF, over the equivalent capacitance of the reversely biased PIN diode 10, which is positioned in the negative feedback path F of the operational amplifier 100 between its inverting input 102 and its output 106 and which is for example 1pF. In this case the amplification factor A of the operational amplifier 100 during the readout time period Tr is about 100. It is clear that other values for the equivalent capacitance will similarly result in an alternative value for the amplification factor during the readout time period Tr. This will result in the output signal 112 at the output 106 of the operational transimpedance amplifier 100 to be equal to the voltage value applied to the negative feedback path multiplied with (A+1)/A, which is the voltage value Vr on the PIN diode 10 at the end of the integration time period Ti, which when A is sufficiently large will be approximated equal with Vr as shown in Figure 5. It is clear from the mode of operation of the radiographic image apparatus 2 as described with reference to Figures 2 - 5 that for enabling the generation of the readout signal 52 in the form of the voltage V10 across the PIN diode 10 at the end of the integration time period Ti, which is applied to the negative feedback path F of the operational transimpedance amplifier 100, the electric charges 3 need to be displaced from the radiation detector 10 via the readout column bus 56 before they can reach the operational amplifier 100. This advantageously reduces image lag as the readout signal 52 produced by the pixel units 1 enables the operational transimpedance amplifier 100 to produce an output signal 112 without delays associated with such a transfer of the electric charges 3. The embodiment of the invention explained with reference to Figures 2-5 also advantageously avoids amplification of the thermal noise or kTC noise injected in the readout column bus 56. The level of this kTC noise is at the frequencies of interest largely determined by the equavlent capacitance of the readout column bus 56 as the other parameters namely k: Boltzmann's constant and T: temperature are parameters that cannot be influenced by the systems design. The equivalent RC circuit for a particular embodiment of a readout column bus could for example comprise a resistor value R of about 2,5kOhm and a capacitor value of about 100pF. At a temperature T of 300K this would result in a RMS noise voltage of about 6,4µV, which corresponds to a charge variance of about 4000e⁻. As the equivalent resistance of the readout column bus 56, which is the cause of the kTC noise is included in the negative feedback path of the operational transimpedance amplifier 100 during the readout time period Tr also the kTC noise is provided at the output signal as the value of the kTC noise multiplied with (A+1)/A which thus avoids amplification of the kTC noise when it would be provided at the input side of the amplifier such as in prior art systems. Preferably the operational transimpedance amplifier 100 is a set and hold operational transimpedance amplifier 100, as such a type of amplifier 100 is able to produce an output signal in fuction of the readout signal 52 as applied in the negative feedback path F at the start of the readout time period Tr without requiring the readout signal 52 to remain present during the entire readout time period Tr.

It is further clear that according to the embodiment of Figures 2 - 5, although a single pixel unit was represented in the schematic representations of Figures 3 - 5, a plurality of these pixel units 1 are arranged in rows 60 and columns 70. These pixel units 1 are controlled to produce a readout signal 52 sequentially, one row 60 at a time in order to produce the information for the complete radiographic image. This means that after the radiation source 5 emitted a predetermined amount of radiation, the driving signal controller 44 will provide a suitable driving signal 42 on the driving line 40 of a first row 60 of pixel units 1, so that the switches 30 of these pixel units 1 will be connected to their readout lines 50, one for each corresponding column 70, in order to provide a corresponding number of readout signals 52 to the corresponding operational amplifiers 100 and subsequently fed to the readout controller 54. During the readout time period Tr of the driving signal 42 for this first row 60 of pixel units 1, all other rows 60 of pixel units 1 will remain in the integration period Ti of their corresponding driving signal 42 in which their switches 30 disconnect the pixel unit 1 from the corresponding readout lines 50. In this way, during the readout time period Tr of this first row 60 of pixel units 1, the readout signals 52 received at the corresponding operational amplifiers 100 and subsequently fed to the readout controller 54 will be able to provide information for a first line of the raster of image information for the radiographic image. After completion of the readout time period Tr of the first row 60 of pixel units 1 its driving signal 42 a next operating cycle can be commenced comprising an integration time period during which the switches 30 will again disconnect the pixel units 1 from their readout lines 50. The readout time period Tr of this subsequent operating cycle for a second row 60 of pixel units 1 will be initiated by the driving signal controller 44 providing a suitable driving signal 42 on the driving line 40 of this second row 60 of pixel units 1. This will connect the switches 30 of these pixel units 1 to their readout lines 50, while all other rows 60 of pixel units 1 will remain in the integration period Ti of their corresponding driving signal 42 in which their switches 30 disconnect these pixel units 1 from the corresponding readout lines 50. In this way, during the readout time period Tr of this second row 60 of pixel units 1, the readout signals 52 received at the corresponding operational amplifiers 100 and subsequently fed to the readout controller 54 will be able to provide information for a second line of the raster of image information for the radiographic image. This mode of operation will continue during subsequent operating cycles until one by one all rows 60 of pixel units 1 have been provided with a suitable driving signal 42 during their readout time period Tr, so that line by line the raster of image information for the radiographic image is completed.

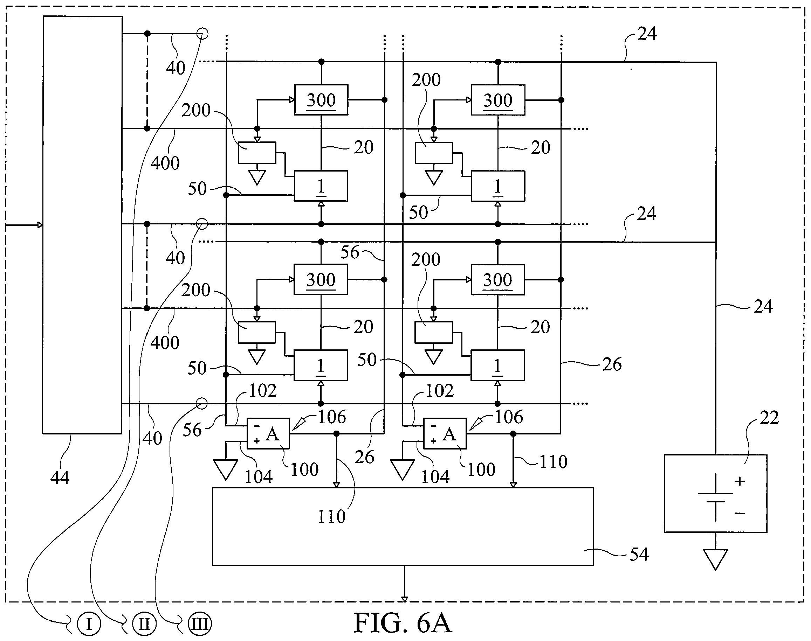

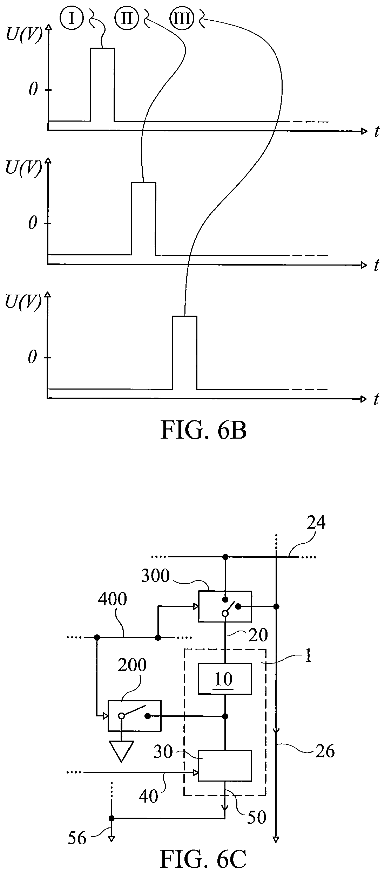

In Figures 6A, 6B and 6C an alternative embodiment of the radiographic image detection apparatus 2 is shown. As schematically shown in Figure 6A it comprises the same arrangement of pixel units 1 in rows 60 and columns 70. Also the arrangement of the drive lines 40 which provide the pixel units 1 with a drive signal 42 is identical. Equally the readout column bus 56 that receives the readout lines 50 of all pixel units 1 is similarly connected to the inverting input 102 of the operational amplifier 100. And also the outputs 106 of the operational amplifiers 100 are connected to the readout signal controller 54 for providing them an output signal 112 on the output lines 100. The main difference with the embodiment of Figures 2 - 5 lies in the arrangement of the input reset switch 200 and the output reset switch 300. Now, instead of a common input reset switch 200 and output reset switch 300 for all pixel units associated with a single operational amplifier 100, each pixel unit 1 comprises its own input reset switch 200 and its own output reset switch 300. The input reset switch 200 associated with each pixel unit 1, as shown in more detail in Figure 6C is connected to the readout line 50 of the pixel unit 1 via the pixel switch 30. It is clear that according to an alternative embodiment the input reset switch 200 could be directly connected to the readout line 50 at the other side of the pixel switch 30. When the input reset switch 30 is in its reset state it will connect to the ground plane the radiation detector 10 at the side of the readout line 50 of the pixel unit 1. Unlike the embodiment of Figures 2-5 it is not required according to this embodiment to put the pixel switch 30 in a closed state during the reset time period Tres as the connection to the ground plane by means of the input reset switch 200 bypasses the pixel switch 30. According to the alternative embodiment mentioned above where the input reset switch 200 is directly connected to the bias line 50, however this pixel switch 30 does need to be closed during the reset time period Tres in order to make the necessary connection between the ground plane and the radiation detector. The inverting input 102 of the operational amplifier 100 is connected to the readout line 50 of the pixel units via the readout column bus 56. As further shown in more detail in Figure 6C the output reset switch 300 of each pixel unit 1 selectively connects the bias line 20 of the pixel unit 1 to the bias voltage output line 24 in its reset state and to the bias column bus 26 in its non-reset state as determined by the reset signal 402 received from the 400. It is clear that the bias voltage output line 24 according to this embodiment needs to be provided to each of the pixel units 1. This means that, similar as explained with reference to the embodiment of Figures 2 - 5, during the reset time period Tres when the input reset switch 200 and the output reset switch 300 are in the reset state, the radiation detector 1 is connected between the ground plane at the side of the readout line 50 and the bias voltage output line 24 at the side of the bias line 20 so that any electrical charges 3 present in the radiation detector 1 can flow away. In contrast to what was explained with reference to Figure 5, as it is not required for this embodiment to close the pixel switch 30 during the reset time period Tres the inverting input 102 of the operational amplifier 102 is not necessarily connected to the ground plane as explained with reference to Figure 5. It is further also clear that during the non-reset time period Tnres when the input reset switch 200 and the output reset switch 300 are in their non-reset state the pixel unit 1 is connected to the readout column bus 56 at the side of the readout line 50 and the bias column bus 26 at the side of the bias line 20 and thus forms the negative feedback path F between the inverting input 102 and the output 106 if the operational amplifier 100 so that the voltage over the radiation detector V10 generated by the electrical charges 3 accumulated during the integration time period Ti when the pixel switch 30 is in its open state can produce an output signal 112 at the output of the operational amplifier 100 during the readout time period Tr when the pixel switch 30 is in its closed state without any delays associated with a transfer of these charges from the radiation detector 10 as explained above. It is further clear that the different signals during an operating cycle of the radiographic image apparatus 2 can be identical to those represented in Figure 5. However as shown in Figure 6A, instead of a single reset line 400 connected to all the input reset switches 200 and the output reset switches 300 there could be provided a plurality of reset lines 400, for example one for each row of pixel units 1. In this way the plurality of reset lines 400 would correspond to the plurality of driving lines 40 and as shown both could be provided with suitable reset signals 402 and drive signals 42 by the drive signal controller 44 as shown in Figure 6A. This setup increases the number of reset lines 400, but allows for the possibility to not reset all radiation detectors 10 of all pixel units 1 at once. This is advantageous as switching all input reset switches 200 and output reset switches 300 can cause a current peak because of the cumulating switching currents of the switches 300, a further current peak can also be the result of all the accumulated electrical charges 3 of all pixel units 1 being released at once during the reset time period Tres. This can be avoided according to the embodiment shown in Figure 6 by providing the reset signal 402 to one reset line 400 at a time, so that the reset operation is executed one row 60 of pixel units 1 at a time. In such a mode of operation as shown with the dot dash line in Figure 6A the reset signal 402 for a first row 60 of pixel units 1 could be provided by the driving signal 42 of a subsequent row 60 of pixel units 1. This would allow to connect the reset line 400 of this first row 60 of pixel units 1 to the drive line 40 of subsequent row 60 of pixel units 1 and would thus allow the drive signal controller 44 to provide reset signals 402 to the input reset switches 200 and output reset switches 300 without the need for distinct reset lines 400 as the reset signal 402 could be provided on the drive line 40 of a subsequent row 60 of pixel units 1 and coincide with the drive signal 42 for this row 60 of pixel units 1 as shown in Figure 6B.

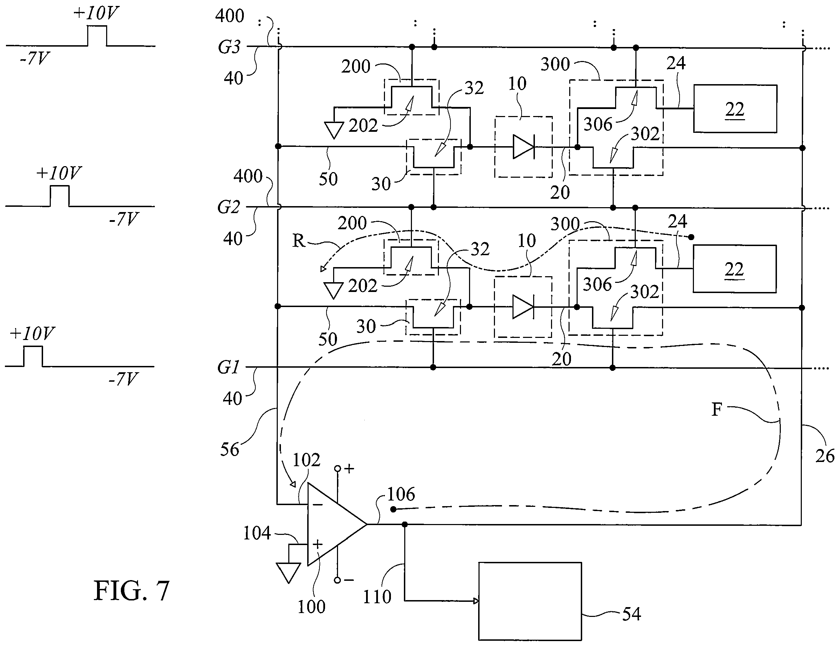

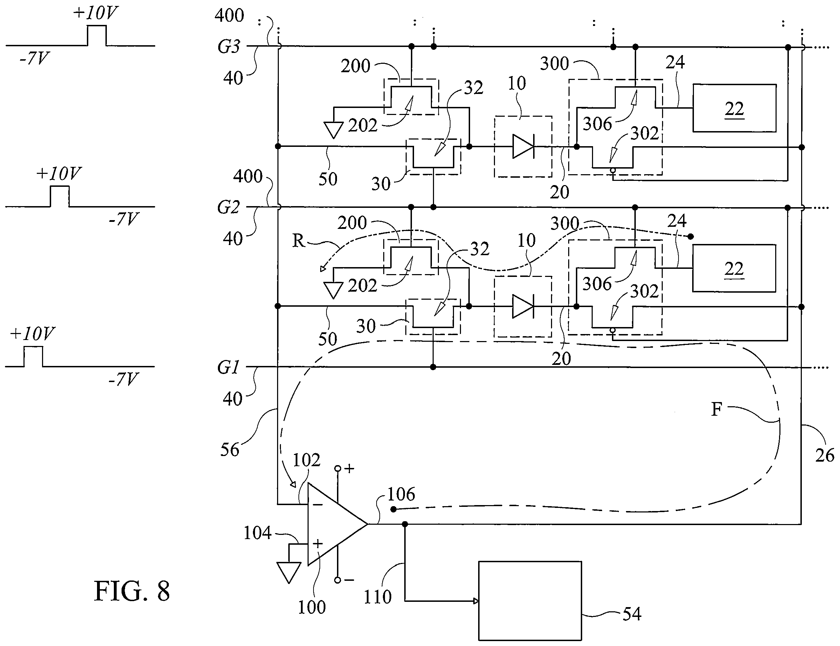

Figure 7 schematically shows the embodiment of the radiographic image detection apparatus 2 of Figures 6A, 6B and 6C in more detail. It is clear that in this embodiment the reset line 400 of a first row 60 of pixel units 1 corresponds to the drive line 40 of a subsequent pixel unit 1 as explained above. The pixel switch 30, input reset switch 200 and output reset switch 300 according to this embodiment comprise transistors that are preferably arranged on the same substrate as the PIN photodiode 10, which means that they are preferably embodied as Thin Film Transisters. The pixel switch 30 comprises a Thin Film Transistor 32 that is connected with its drain to the anode 14 of the PIN photodiode 10, its gate to the drive line 40 and its sorce to the readout line of the pixel unit 1. The readout lines 50 of the pixel units 1 of a column 70 being connected to the inverting input 102 of the operational amplifier 100 by means of the readout column bus 106. The input reset switch 200, as shown, comprises a Thin Film Transistor 202 that is connected with its gate to the reset line 400 that is formed by the drive line 40 of a subsequent row 60 of pixel units 1, its source to the ground plane, and its drain to the anode 14 of the PIN photodiode 10 and via the pixel switch 30 to the readout line 50 of the pixel unit 1 and thus via the readout column bus 56 to the inverting input 104 of the operational amplifier 100. According to the alternative embodiment referred to above the drain of the input reset switch 200 could alternatively be connected directly to the readout line 50 of the pixel unit 1 and thus be connected via the pixel switch 30 to the anode 14 of the PIN photodiode 10. As further shown in Figure 7 the output reset switch 300 of each pixel unit 1 that selectively connects the bias line 20 of the pixel unit to the bias voltage output line 24 or the bias column bus 26 comprises a first Thin Film Transistor 302 and a second Thin Film Transistor 304. The first Thin Film Transistor 302 being connected with its gate of its to the drive line 40, however according to an alternative embodiment shown in Figure 8 its inverted gate could be connected to the reset line 400 formed by the drive line 40 of the subsequent row of pixel units 1. The first Thin Film Transistor 302 is further connected with its source to the output 106 of the operational amplifier 100 via the bias column bus 26, and its drain is connected to the bias line 20 of its pixel unit 1. The second Thin Film Transistor 304 is connected with its gate to the reset line 400 formed by the drive line 40 for the pixel units 1 of the subsequent row 60, its source to the drain of the first Thin Film Transistor 302 and thus also to the cathode 12 of the PIN diode 10 and the bias line 20 of its pixel unit 1, and its drain to the bias voltage output line 24. It is clear that the operation of the embodiments of Figures 6 - 8 is similar to that as explained with reference to the embodiment of Figures 2 - 5 in that the input reset switch 200 and output reset switch 300 connect the PIN photo diode 10 in between the ground plane and the bias voltage output line 24 during the reset time period, thus forming a reset path R, and during the non-reset time period in the negative feedback path F of the operational amplifier between the inverting input 102 and the output 106 via the readout column bus 56 and the bias column bus 26 respectively. In the embodiments of Figures 7 and 8, it is clear that the reset time period Tres of the operating cycle of a first row 60 of pixel units 1 corresponds to the readout time period Tr of the operating cycle of a subsequent row 60 of pixel units 1 of the radiographic image detection apparatus 2 as the reset signal 402 for the first row of pixel units 1 corresponds to the driving signal 40 for the subsequent row of pixel units 1. This allow a simple and efficient setup of the drive signal controller 44 as the drive lines 40 and reset lines 400 are formed by a shared line for a first and subsequent row of pixel units 1. Although the inverted gate of Thin Film Transistor 302 could be realised by using a p-type transistor that is complementary to an n-type transistor 304 as shown in Figures 4, according to an alternative embodiment the transistor 302 could also be realised as an n-MOS transistor, but then its gate should be preceded by a separate inverter, for example a generally known inverter circuit with Thin Film Transistors.

It is clear that, although in the abovementioned embodiments the corresponding set of pixel units 1 that is selectively connectable to an operational amplifier 100 was described of a set of pixel units 1 arranged in a column 70 of the radiographic image detecting apparatus 2, alternative embodiments are possible, in which the corresponding set of pixel units 1 is any other suitable group of pixel units 1 that are connectable to an operational amplifier 100 of the radiographic image detecting apparatus 2.

It is further clear that numerous alternative embodiments comprising a pixel unit 1 according to the invention can be provided. Specifically alternative combinations of a specific radiation detector 10, a specific pixel switch 30 a specific input reset switches 200 and specific output reset switches. It is further also clear that the implementation of the switches 30, 200, 300 although in some of the specific embodiments illustrated as Thin Film Transistors or MOSFET transistors can be replaced by other suitable alternatives such as for example other suitable semiconductor technologies, such as other field effect transistor technologies for example organic field effect transistors, or other technologies such as bipolar junction transistors. Specifically for the pixel switch 30 other alternative semiconductor elements than transistors could be used to perform its function such as for example diodes or thyristors.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A radiographic image detecting apparatus (2) comprising a plurality of pixel units (1) and a plurality of operational amplifiers (100), each of said operational amplifiers (100) selectively connectable to a corresponding set of the pixel units (1), Said pixel unit (1) comprising:
- a radiation detector (10) configured to generate electric charge (3) upon reception of radiation (4) emitted by a radiographic image radiation source (5);
- a bias line (20) configured to provide a bias voltage (Vbias) relative to a ground plane when connected to a bias voltage output line (24) of a bias voltage supply (22), the bias line (20) being connected to the radiation detector (10); and
- a pixel switch (30) connected to the radiation detector (10), a driving line (40) and a readout line (50), the pixel switch (30) configured to operate in function of a driving signal (42) received from the driving line (40) such that the switch (30):
- during an integration time period (Ti), in an open state, disconnects the radiation detector (10) from the readout line (50), such that the electric charges (3) generated by the radiation detector (10) are accumulated;
- during a readout time period (Tr), in a closed state, connects the radiation detector (10) to the readout line (50) such that the accumulated electric charges (3) generated by the radiation detector (10) produce a readout signal (52),
The operational amplifier (100) comprising:
- A non-inverting input (104) connected to a ground plane;
- An inverting input (102) configured to be connected to the readout lines (50) of the corresponding set of the pixel units (1) during the readout time period (Tr) for receiving the readout signal (52);
- An output (106) configured to produce an output signal (112) on an output line (110) in function of the received readout signal (52);
**CHARACTERIZED IN THAT**
the radiographic image detecting apparatus (2) further comprises:
- At least one input reset switch (200) respectively associated with each operational amplifier (100), connected to the readout line (50) of one or more corresponding pixel units (1), the ground plane and a reset line (400), and the input reset switch (200) configured to operate in function of a reset signal (402) received from the reset line (400) such that the input reset switch (200):
- in a reset state, connects the readout line (50) of one or more of the corresponding pixel units (1) to the ground plane; and
- in a non-reset state, disconnect the readout line (50) of one or more of the corresponding pixel units (1) from the ground plane,
- At least one output reset switch (300) respectively associated with each operational amplifier (100), connected to the bias line (20) of one or more corresponding pixel units (1), the bias voltage output line (24) of the bias voltage supply (22), the output (106) of the associated operational amplifier (100) and a reset line (400), and the output reset switch (300) configured to operate in function of a reset signal (402) received from the reset line (400) such that the output reset switch (200):
- in a reset state, connects the bias line (20) of one or more of the corresponding pixel units (1) to the bias voltage output line (24) of the bias voltage supply (26) and disconnects this bias line (20) from the output (106) of the associated operational amplifier (100); and
- in a non-reset state, disconnects the bias line (20) of one or more of the corresponding pixel units (1) from the bias voltage output line (24) of the bias voltage supply (22) and connects this bias line (20) to the output (106) of the associated operational amplifier (100),
the radiographic image apparatus (2) further being configured to operate according to an operating cycle comprising a reset time period (Tres) and a subsequent non-reset time period (Tnres), the non-reset time period (Tnres) comprising the integration time period (Ti) and subsequent the readout time period (Tr),
- the input reset switch (200) and the output reset switch (300) further being configured to operate in the reset state during the reset time period (Tres) and in the non-reset state during the non-reset time period (Tnres).

2. A radiographic image detecting apparatus according to claim 1 or 2, **characterized in that** the radiation detector (10) comprises a photo-electric detector (10) which comprises a PIN photodiode (10) configured to detect X ray photons.

3. A radiographic image detecting apparatus according to claim 3, **characterized in that** the PIN photo diode (10) is connected with its cathode (12) to the bias line (20) and with its anode (14) to the pixel switch (30), and **in that** the bias voltage (22) is a predetermined positive voltage with respect to the ground plane.

4. A radiographic image detecting apparatus according to any of the preceding claims, **characterized in that** the operational amplifier (100) comprises an operational transimpedance amplifier, preferable a sample and hold operational transimpedance amplifier.

5. A radiographic image detecting apparatus according to any of the preceding claims, **characterized in that** the pixel switch (30) comprises a Thin Film Transistor (32) that is connected with:
- its gate to the driving line (40);
- its source to the readout line (50);
- its drain to the radiation detector (10).

6. A radiographic image detecting apparatus according to any of the preceding claims, **characterized in that** there is one input reset switch (200) associated with each operational amplifier (100), connected to the readout lines (50) of all corresponding pixel units (1), these readout lines (50) further being directly connected to the inverting input (102) of the operational amplifier (100).

7. A radiographic image detecting apparatus according to claim 6, **characterized in that** the input reset switch (200) comprises a MOSFET Transistor (202) that is connected with:
- its gate to the reset line (400);
- its source to the ground plane;
- its drain to these readout lines (50) and the inverting input (102) of the operational amplifier (100).

8. A radiographic image detecting apparatus according to claim 6 or 7, **characterized in that** there is one output reset switch (200) associated with each operational amplifier (100), connected to the bias lines (20) of all corresponding pixel units (1).

9. A radiographic image detecting apparatus according to claim 8, **characterized in that** the output reset switch (300) comprises complementary pair of MOSFET Transistors comprising a first MOSFET Transistor (302) and a second MOSFET Transistor (304),
the first MOSFET Transistor (302) being connected with:
- its inverted gate to the reset line (400);
- its source to the output (106) of the operational amplifier (100);
- its drain to these bias lines (20),
the second MOSFET Transistor (304) being connected with:
- its gate to the reset line (400);
- its source to the drain of the first MOSFET Transistor (302) and these bias lines (20);
- its drain to the bias voltage output line (24).

10. A radiographic image detecting apparatus according to any of the claims 1 to 5, **characterized in that** each pixel unit (1) comprises one input reset switch (200) directly connected or connected via the pixel switch (30) to the readout line (50) of this pixel units (1), this readout line (50) further being connected to the inverting input (102) of the operational amplifier (100).

11. A radiographic image detecting apparatus according to claim 10, **characterized in that** the input reset switch (200) comprises a Thin Film Transistor (202) that is connected with:
- its gate to the reset line (400);
- its source to the ground plane;
- its drain directly or via the pixel switch (30) to these readout lines (50) and the inverting input (102) of the operational amplifier (100).

12. A radiographic image detecting apparatus according to claim 10 or 11, **characterized in that** each pixel unit (1) comprises one output reset switch (300), connected to the bias line (20) of its pixel unit (1).

13. A radiographic image detecting apparatus according to claim 12, **characterized in that** the output reset switch (300) comprises a first Thin Film Transistor (302) and a second Thin Film Transistor (304),
the first Thin Film Transistor (302) being connected with:
- its inverted gate to the reset line (400) or its gate to the drive line (40);
- its source to the output (106) of the operational amplifier (100);
- its drain to the bias line (20) of its pixel unit (1),
the second Thin Film Transistor (304) being connected with:
- its gate to the reset line (400);
- its source to the drain of the first Thin Film Transistor (302) and the bias line (20) of its pixel unit (1);
- its drain to the bias voltage output line (24).

14. A radiographic image detecting apparatus according to any of the preceding claims, **characterized in that** the plurality of pixel units (1) are arranged in a plurality of rows (60) and columns (70), the image detecting apparatus comprising a plurality of the driving lines (40) and a plurality of the readout lines (50), the driving lines (40) each being connected to a plurality of pixel units (1) of a single row and each of the readout lines (50) each being connected to a plurality of pixel units (1) of a single column, and the corresponding set of the pixel units (1) comprising a set of pixels units (1) of a single column (70).

15. A radiographic image detecting apparatus according to claim 14 when dependent on claim 12, **characterized in that**
- the reset line (400) of the pixel units (1) of a first row (60) is formed by the drive line (40) of the pixel units (1) of a subsequent row (60) of pixel units (1)
- the output reset switch (300) of the pixel units (1) of the first row (60) comprise a first Thin Film Transistor (302) and a second Thin Film Transistor (304),
- the first Thin Film Transistor (302) being connected with:
- its inverted gate to the reset line (400) or its gate to the drive line (40) of the first row (60) of pixel units (1);
- its source to the output (106) of the operational amplifier (100);
- its drain to the bias line (20) of its pixel unit (1),
- the second Thin Film Transistor (304) being connected with:
- its gate to the reset line (400);
- its source to the drain of the first Thin Film Transistor (302) and the bias line (20) of its pixel unit (1);
- its drain to the bias voltage output line (24).

## Patentansprüche

1. Eine Röntgenbild-Erkennungsvorrichtung (2), umfassend eine Vielzahl von Pixeleinheiten (1) und eine Vielzahl von Operationsverstärkern (100), wobei jeder der Operationsverstärker (100) selektiv mit einem entsprechenden Satz der Pixeleinheiten (1) verbunden werden kann,
wobei die Pixeleinheit (1) Folgendes umfasst:
- einen Strahlungsdetektor (10), der so konfiguriert ist, dass er beim Empfang von durch eine Röntgenbildstrahlungsquelle (5) emittierter Strahlung (4) elektrische Ladung (3) erzeugt,
- eine Biasleitung (20), die so konfiguriert ist, dass sie, bezogen auf eine Bezugserde, eine Vorspannung (Vbias) liefert, wenn sie mit einer Biasausgangsleitung (24) einer Biasquelle (22) verbunden ist, wobei die Biasleitung (20) mit dem Strahlungsdetektor (10) verbunden ist, und
- einen Pixelschalter (30), der mit dem Strahlungsdetektor (10), einer Steuerleitung (40) und einer Ausleseleitung (50) verbunden ist, wobei der Pixelschalter (30) so konfiguriert ist, dass er als Funktion eines von der Steuerleitung (40) empfangenen Steuersignals (42) so arbeitet, dass der Schalter (30):
- während eines Integrationszeitraums (Ti), in offenem Zustand, den Strahlungsdetektor (10) von der Ausleseleitung (50) abkoppelt, so dass die durch den Strahlungsdetektor (10) erzeugten elektrischen Ladungen (3) akkumuliert werden,
- während eines Auslesezeitraums (Tr), in geschlossenem Zustand, den Strahlungsdetektor (10) an die Ausleseleitung (50) koppelt, so dass die akkumulierten, durch den Strahlungsdetektor (10) erzeugten elektrischen Ladungen (3) ein Auslesesignal (52) erzeugen,
wobei der Operationsverstärker (100) Folgendes umfasst:
- einen mit einer Bezugserde verbundenen nicht-invertierenden Eingang (104),
- einen invertierenden Eingang (102), der so konfiguriert ist, dass er zum Empfang des Auslesesignals (52) mit den Ausleseleitungen (50) des entsprechenden Satzes der Pixeleinheiten (1) während des Auslesezeitraums (Tr) verbunden ist,
- einen Ausgang (106), der so konfiguriert ist, dass er als Funktion des empfangenen Auslesesignals (52) ein Ausgangssignal (112) auf einer Ausgangsleitung (110) erzeugt,
**dadurch gekennzeichnet, dass**
die Röntgenbild-Erkennungsvorrichtung (2) ferner Folgendes umfasst:
- mindestens einen Eingangsresetschalter (200), der jedem jeweiligen Operationsverstärker (100) zugeordnet ist und mit der Ausleseleitung (50) einer oder mehrerer entsprechender Pixeleinheiten (1), der Bezugserde und einer Resetleitung (400) verbunden ist, wobei der Eingangsresetschalter (200) so konfiguriert ist, dass er als Funktion eines von der Resetleitung (400) empfangenen Resetsignals (402) derart arbeitet, dass der Eingangsresetschalter (200):
- in einem rückgesetzten Zustand die Ausleseleitung (50) einer oder mehrerer der entsprechenden Pixeleinheiten (1) an die Bezugserde koppelt, und
- in einem nicht-rückgesetzten Zustand die Ausleseleitung (50) einer oder mehrerer der entsprechenden Pixeleinheiten (1) von der Bezugserde abkoppelt,
- mindestens einen Ausgangsresetschalter (300), der jedem jeweiligen Operationsverstärker (100) zugeordnet ist und mit der Biasleitung (20) einer oder mehrerer entsprechender Pixeleinheiten (1), der Biasausgangsleitung (24) der Biasquelle (22), dem Ausgang (106) des zugeordneten Operationsverstärkers (100) und einer Resetleitung (400) verbunden ist, wobei der Ausgangsresetschalter (300) so konfiguriert ist, dass er als Funktion eines von der Resetleitung (400) empfangenen Resetsignals (402) so arbeitet, dass der Ausgangsresetschalter (200) :
- in einem rückgesetzten Zustand die Biasleitung (20) einer oder mehrerer der entsprechenden Pixeleinheiten (1) an die Biasausgangsleitung (24) der Biasquelle (26) koppelt und diese Biasleitung (20) vom Ausgang (106) des zugeordneten Operationsverstärkers (100) abkoppelt, und
- in einem nicht-rückgesetzten Zustand die Biasleitung (20) einer oder mehrerer der entsprechenden Pixeleinheiten (1) von der Biasausgangsleitung (24) der Biasquelle (22) abkoppelt und diese Biasleitung (20) an den Ausgang (106) des zugeordneten Operationsverstärkers (100) koppelt,
die Röntgenbildvorrichtung (2) ferner so konfiguriert ist, dass sie gemäß einem einen Resetzeitraum (Tres) und einen anschließenden Nicht-Resetzeitraum (Tnres) umfassenden Betriebszyklus arbeitet, wobei der Nicht-Resetzeitraum (Tnres) den Integrationszeitraum (Ti) und den anschließenden Auslesezeitraum (Tr) umfasst,
- der Eingangsresetschalter (200) und der Ausgangsresetschalter (300) ferner so konfiguriert sind, dass sie im rückgesetzten Zustand während des Resetzeitraums (Tres) arbeiten und im nicht-rückgesetzten Zustand während des Nicht-Resetzeitraums (Tnres) arbeiten.

2. Eine Röntgenbild-Erkennungsvorrichtung nach Anspruch 1 oder 2, **dadurch gekennzeichnet, dass** der Strahlungsdetektor (10) einen fotoelektrischen Detektor (10), der eine zum Detektieren von Röntgenfotonen konfigurierte PIN-Fotodiode (10) umfasst, umfasst.

3. Eine Röntgenbild-Erkennungsvorrichtung nach Anspruch 3, **dadurch gekennzeichnet, dass** die PIN-Fotodiode (10) über ihre Kathode (12) mit der Biasleitung (20) verbunden ist und über ihre Anode (14) mit dem Pixelschalter (30) verbunden ist und dass die Vorspannung (22) eine vorgegebene positive Spannung, bezogen auf die Bezugserde, ist.

4. Eine Röntgenbild-Erkennungsvorrichtung nach einem der vorstehenden Ansprüche, **dadurch gekennzeichnet, dass** der Operationsverstärker (100) einen Transimpedanz-Operationsverstärker, bevorzugt einen Abtast-Halte-Transimpedanz-Operationsverstärker, umfasst.

5. Eine Röntgenbild-Erkennungsvorrichtung nach einem der vorstehenden Ansprüche, **dadurch gekennzeichnet, dass** der Pixelschalter (30) einen Dünnschichttransistor (32) umfasst, der:
- über sein Gate mit der Steuerleitung (40) verbunden ist,
- über sein Source mit der Ausleseleitung (50) verbunden ist,
- über sein Drain mit dem Strahlungsdetektor (10) verbunden ist.

6. Eine Röntgenbild-Erkennungsvorrichtung nach einem der vorstehenden Ansprüche, **dadurch gekennzeichnet, dass** ein einzelner, jedem Operationsverstärker (100) zugeordneter Eingangsresetschalter (200) mit den Ausleseleitungen (50) aller entsprechenden Pixeleinheiten (1) verbunden ist, wobei diese Ausleseleitungen (50) ferner direkt mit dem invertierenden Eingang (102) des Operationsverstärkers (100) verbunden sind.

7. Eine Röntgenbild-Erkennungsvorrichtung nach Anspruch 6, **dadurch gekennzeichnet, dass** der Eingangsresetschalter (200) einen MOSFET-Transistor (202) umfasst, der:
- über sein Gate mit der Resetleitung (400) verbunden ist,
- über sein Source mit der Bezugserde verbunden ist,
- über sein Drain mit diesen Ausleseleitungen (50) und dem invertierenden Eingang (104) des Operationsverstärkers (100) verbunden ist.

8. Eine Röntgenbild-Erkennungsvorrichtung nach Anspruch 6 oder 7, **dadurch gekennzeichnet, dass** ein einzelner, jedem Operationsverstärker (100) zugeordneter Ausgangsresetschalter (200) mit den Biasleitungen (20) aller entsprechenden Pixeleinheiten (1) verbunden ist.

9. Eine Röntgenbild-Erkennungsvorrichtung nach Anspruch 8, **dadurch gekennzeichnet, dass** der Ausgangsresetschalter (300) ein komplementäres Paar von MOSFET-Transistoren, umfassend einen ersten MOSFET-Transistor (302) und einen zweiten MOSFET-Transistor (304), umfasst,
wobei der erste MOSFET-Transistor (302):
- über sein invertiertes Gate mit der Resetleitung (400) verbunden ist,
- über sein Source mit dem Ausgang (106) des Operationsverstärkers (100) verbunden ist,
- über sein Drain mit diesen Biasleitungen (20) verbunden ist, wobei der zweite MOSFET-Transistor (304):
- über sein Gate mit der Resetleitung (400) verbunden ist,
- über sein Source mit dem Drain des ersten MOSFET-Transistors (302) und diesen Biasleitungen (20) verbunden ist,
- über sein Drain mit der Biasausgangsleitung (24) verbunden ist.

10. Eine Röntgenbild-Erkennungsvorrichtung nach einem der Ansprüche 1 bis 5, **dadurch gekennzeichnet, dass** jede Pixeleinheit (1) einen direkt oder über den Pixelschalter (30) mit der Ausleseleitung (50) dieser Pixeleinheiten (1) verbundenen Eingangsresetschalter (200) umfasst, wobei diese Ausleseleitung (50) ferner mit dem invertierenden Eingang (104) des Operationsverstärkers (100) verbunden ist.

11. Eine Röntgenbild-Erkennungsvorrichtung nach Anspruch 10, **dadurch gekennzeichnet, dass** der Eingangsresetschalter (200) einen Dünnschichttransistor (202) umfasst, der:
- über sein Gate mit der Resetleitung (400) verbunden ist,
- über sein Source mit der Bezugserde verbunden ist,
- über sein Drain direkt oder über den Pixelschalter (30) mit diesen Ausleseleitungen (50) und dem invertierenden Eingang (104) des Operationsverstärkers (100) verbunden ist.

12. Eine Röntgenbild-Erkennungsvorrichtung nach Anspruch 10 oder 11, **dadurch gekennzeichnet, dass** jede Pixeleinheit (1) einen mit der Biasleitung (20) seiner Pixeleinheit (1) verbundenen Ausgangsresetschalter (300) umfasst.

13. Eine Röntgenbild-Erkennungsvorrichtung nach Anspruch 12, **dadurch gekennzeichnet, dass** der Ausgangsresetschalter (300) einen ersten Dünnschichttransistor (302) und einen zweiten Dünnschichttransistor (304) umfasst,
wobei der erste Dünnschichttransistor (302):
- über sein invertiertes Gate mit der Resetleitung (400) oder über sein Gate mit der Steuerleitung (40) verbunden ist,
- über sein Source mit dem Ausgang (106) des Operationsverstärkers (100) verbunden ist,
- über sein Drain mit der Biasleitung (20) seiner Pixeleinheit (1) verbunden ist,
wobei der zweite Dünnschichttransistor (304):
- über sein Gate mit der Resetleitung (400) verbunden ist,
- über sein Source mit dem Drain des ersten Dünnschichttransistors (302) und der Biasleitung (20) seiner Pixeleinheit (1) verbunden ist,
- über sein Drain mit der Biasausgangsleitung (24) verbunden ist.

14. Eine Röntgenbild-Erkennungsvorrichtung nach einem der vorstehenden Ansprüche, **dadurch gekennzeichnet, dass** die Vielzahl von Pixeleinheiten (1) in einer Vielzahl von Zeilen (60) und Spalten (70) angeordnet ist, wobei die Bilderkennungsvorrichtung eine Vielzahl der Steuerleitungen (40) und eine Vielzahl der Ausleseleitungen (50) umfasst, jede Steuerleitung (40) mit einer Vielzahl von Pixeleinheiten (1) einer einzelnen Zeile verbunden ist, jede Ausleseleitung (50) mit einer Vielzahl von Pixeleinheiten (1) einer einzelnen Spalte verbunden ist und der entsprechende Satz der Pixeleinheiten (1) einen Satz von Pixeleinheiten (1) einer einzelnen Spalte (70) umfasst.

15. Eine Röntgenbild-Erkennungsvorrichtung nach Anspruch 14, wenn abhängig vom Anspruch 12, **dadurch gekennzeichnet, dass**
- die Resetleitung (400) der Pixeleinheiten (1) einer ersten Zeile (60) durch die Steuerleitung (40) der Pixeleinheiten (1) einer anschließenden Zeile (60) von Pixeleinheiten (1) gebildet wird,
- der Ausgangsresetschalter (300) der Pixeleinheiten (1) der ersten Zeile (60) einen ersten Dünnschichttransistor (302) und einen zweiten Dünnschichttransistor (304) umfasst,
- wobei der erste Dünnschichttransistor (302):
- über sein invertiertes Gate mit der Resetleitung (400) oder über sein Gate mit der Steuerleitung (40) der ersten Zeile (60) von Pixeleinheiten (1) verbunden ist,
- über sein Source mit dem Ausgang (106) des Operationsverstärkers (100) verbunden ist,
- über sein Drain mit der Biasleitung (20) seiner Pixeleinheit (1) verbunden ist,
- wobei der zweite Dünnschichttransistor (304):
- über sein Gate mit der Resetleitung (400) verbunden ist,
- über sein Source mit dem Drain des ersten Dünnschichttransistors (302) und der Biasleitung (20) seiner Pixeleinheit (1) verbunden ist,
- über sein Drain mit der Biasausgangsleitung (24) verbunden ist.

## Revendications

1. Appareil de détection d'image radiographique (2) comprenant une multitude d'unités de pixel (1) et une multitude d'amplificateurs opérationnels (100), chacun des amplificateurs opérationnels (100) pouvant être connecté de manière sélective à un ensemble correspondant d'unités de pixel (1),
ladite unité de pixel (1) comprenant:
- un détecteur de rayonnement (10) configuré de façon à générer une charge électrique (3) lorsqu'il reçoit les rayons (4) émis par une source de rayonnement d'image radiographique (5),
- une ligne de polarisation (20) configurée de façon à fournir une tension de polarisation (Vbias), par rapport à un plan de sol, lorsqu'elle est connectée à une ligne de sortie de tension de polarisation (24) d'une source de tension de polarisation (22), ladite ligne de polarisation (20) étant connectée au détecteur de rayonnement (10), et
- un commutateur de pixel (30) connecté au détecteur de rayonnement (10), à une ligne de pilotage (40) et à une ligne de lecture (50), ledit commutateur de pixel (30) étant configuré de façon à fonctionner en fonction d'un signal de pilotage (42) reçu de la ligne de pilotage (40) de façon à ce que le commutateur (30) :
- lors d'un espace de temps d'intégration (Ti), en état ouvert, découple le détecteur de rayonnement (10) de la ligne de lecture (50) de façon à ce que les charges électriques (3) générées par le détecteur de rayonnement (10) soient accumulées,
- lors d'un espace de temps de lecture (Tr), en état fermé, couple le détecteur de rayonnement (10) à la ligne de lecture (50) de façon à ce que les charges électriques (3) accumulées, générées par le détecteur de rayonnement (10), génèrent un signal de lecture (52),
ledit amplificateur opérationnel (100) comprenant:
- une entrée non inverseuse (104) connectée à un plan de sol,
- une entrée inverseuse (102) configurée de façon à être connectée aux lignes de lecture (50) de l'ensemble correspondant des unités de pixel (1) lors de l'espace de temps de lecture (Tr) afin de recevoir le signal de lecture (52),
- une sortie (106) configurée de façon à générer un signal de sortie (112) sur une ligne de sortie (110) en fonction du signal de lecture (52) reçu,
**caractérisé en ce que**
ledit appareil de détection d'image radiographique (2) comprend en outre:
- au moins un commutateur de réinitialisation d'entrée (200) associé respectivement à chaque amplificateur opérationnel (100) et connecté à la ligne de lecture (50) d'une ou de plusieurs unités de pixel (1) correspondantes, au plan de sol et à une ligne de réinitialisation (400), ledit commutateur de réinitialisation d'entrée (200) étant configuré de façon à fonctionner en fonction d'un signal de réinitialisation (402) reçu de la ligne de réinitialisation (400) de façon à ce que le commutateur de réinitialisation d'entrée (200):
- dans un état réinitialisé, couple la ligne de lecture (50) d'une ou de plusieurs des unités de pixel (1) correspondantes au plan de sol, et
- dans un état non réinitialisé, découple la ligne de lecture (50) d'une ou de plusieurs des unités de pixel (1) correspondantes du plan de sol,
- au moins un commutateur de réinitialisation de sortie (300) associé respectivement à chaque amplificateur opérationnel (100) et connecté à la ligne de polarisation (20) d'une ou de plusieurs unités de pixel (1) correspondantes, à la ligne de sortie de tension de polarisation (24) de la source de tension de polarisation (22), à la sortie (106) de l'amplificateur opérationnel (100) associé et à une ligne de réinitialisation (400), ledit commutateur de réinitialisation de sortie (300) étant configuré de façon à fonctionner en fonction d'un signal de réinitialisation (402) reçu de la ligne de réinitialisation (400) de façon à ce que le commutateur de réinitialisation de sortie (200) :
- dans un état réinitialisé, couple la ligne de polarisation (20) d'une ou de plusieurs des unités de pixel (1) correspondantes à la ligne de sortie de tension de polarisation (24) de la source de tension polarisation (26) et découple cette ligne de polarisation (20) de la sortie (106) de l'amplificateur opérationnel (100) associé, et
- dans un état non réinitialisé, découple la ligne de polarisation (20) d'une ou de plusieurs des unités de pixel (1) correspondantes de la ligne de sortie de tension de polarisation (24) de la source de tension de polarisation (22) et couple la ligne de polarisation (20) à la sortie (106) de l'amplificateur opérationnel (100) associé,
l'appareil d'image radiographique (2) étant en outre configuré de façon à fonctionner selon un cycle opérationnel comprenant un espace de temps de réinitialisation (Tres) et un espace de temps de non-réinitialisation (Tnres) subséquent, ledit espace de temps de non-réinitialisation (Tnres) comprenant l'espace de temps d'intégration (Ti) et l'espace de temps de lecture (Tr) subséquent,
- ledit commutateur de réinitialisation d'entrée (200) et le commutateur de réinitialisation de sortie (300) étant en outre configurés de façon à fonctionner dans l'état réinitialisé lors de l'espace de temps de réinitialisation (Tres) et fonctionnent dans l'état non réinitialisé lors de l'espace de temps de non-réinitialisation (Tnres).

2. Appareil de détection d'image radiographique selon la revendication 1 ou 2, **caractérisé en ce que** le détecteur de rayonnement (10) comprend un détecteur photoélectrique (10) comprenant une photodiode PIN (10) configuré de façon à détecter des photons de rayons X.

3. Appareil de détection d'image radiographique selon la revendication 3, **caractérisé en ce que** la photodiode PIN (10) est connectée à la ligne de polarisation (20) par sa cathode (12) et est connectée au commutateur de pixel (30) par son anode (14) et que la tension de polarisation (22) est une tension positive prédéterminée par rapport au plan de sol.

4. Appareil de détection d'image radiographique selon l'une quelconque des revendications précédentes, **caractérisé en ce que** l'amplificateur opérationnel (100) comprend un amplificateur opérationnel à transimpédance, de préférence un amplificateur opérationnel à transimpédance de type échantillonneur-bloqueur.

5. Appareil de détection d'image radiographique selon l'une quelconque des revendications précédentes, **caractérisé en ce que** le commutateur de pixel (30) comprend un transistor en couches minces (32) qui est connecté:
- à la ligne de pilotage (40) par sa grille,
- à la ligne de lecture (50) par sa source,
- au détecteur de rayonnement (10) par son drain.

6. Appareil de détection d'image radiographique selon l'une quelconque des revendications précédentes, **caractérisé en ce qu'**un seul commutateur de réinitialisation d'entrée (200) associé à chaque amplificateur opérationnel (100) est connecté aux lignes de lecture (50) de toutes les unités de pixel (1) correspondantes, lesdites lignes de lecture (50) étant en outre directement connectées à l'entrée inverseuse (102) de l'amplificateur opérationnel (100).

7. Appareil de détection d'image radiographique selon la revendication 6, **caractérisé en ce que** le commutateur de réinitialisation d'entrée (200) comprend un transistor MOSFET (202) qui est connecté:
- à la ligne de réinitialisation (400) par sa grille,
- au plan de sol par sa source,
- à ces lignes de lecture (50) et à l'entrée inverseuse (104) de l'amplificateur opérationnel (100) par son drain.

8. Appareil de détection d'image radiographique selon la revendication 6 ou 7, **caractérisé en ce qu'**un seul commutateur de réinitialisation de sortie (200) associé à chaque amplificateur opérationnel (100) est connecté aux lignes de polarisation (20) de toutes les unités de pixel (1) correspondantes.

9. Appareil de détection d'image radiographique selon la revendication 8, **caractérisé en ce que** le commutateur de réinitialisation de sortie (300) comprend une paire complémentaire de transistors MOSFET comprenant un premier transistor MOSFET (302) et un deuxième transistor MOSFET (304), ledit premier transistor MOSFET (302) étant connecté:
- à la ligne de réinitialisation (400) par sa grille inversée,
- à la sortie (106) de l'amplificateur opérationnel (100) par sa source,
- à ces lignes de polarisation (20) par son drain,
ledit deuxième transistor MOSFET (304) étant connecté:
- à la ligne de réinitialisation (400) par sa grille,
- au drain du premier transistor MOSFET (302) et à ces lignes de polarisation (20) par sa source,
- à la ligne de sortie de tension de polarisation (24) par son drain.

10. Appareil de détection d'image radiographique selon l'une quelconque des revendications 1 à 5, **caractérisé en ce que** chaque unité de pixel (1) comprend un commutateur de réinitialisation d'entrée (200) connecté soit directement soit par le commutateur de pixel (30) à la ligne de lecture (50) de ces unités de pixel (1), ladite ligne de lecture (50) étant en outre connectée à l'entrée inverseuse (104) de l'amplificateur opérationnel (100).

11. Appareil de détection d'image radiographique selon la revendication 10, **caractérisé en ce que** le commutateur de réinitialisation d'entrée (200) comprend un transistor en couches minces (202) qui est connecté:
- à la ligne de réinitialisation (400) par sa grille,
- au plan de sol par sa source,
- à ces lignes de lecture (50) et à l'entrée inverseuse (104) de l'amplificateur opérationnel (100) par son drain et ce directement ou par le commutateur de pixel (30).

12. Appareil de détection d'image radiographique selon la revendication 10 ou 11, **caractérisé en ce que** chaque unité de pixel (1) comprend un commutateur de réinitialisation de sortie (300) connecté à la ligne de polarisation (20) de son unité de pixel (1).

13. Appareil de détection d'image radiographique selon la revendication 12, **caractérisé en ce que** le commutateur de réinitialisation de sortie (300) comprend un premier transistor en couches minces (302) et un deuxième transistor en couches minces (304),
ledit premier transistor en couches minces (302) étant connecté:
- à la ligne de réinitialisation (400) par sa grille inversée ou à la ligne de pilotage (40) par sa grille,
- à la sortie (106) de l'amplificateur opérationnel (100) par sa source,
- à la ligne de polarisation (20) de son unité de pixel (1) par son drain,
ledit deuxième transistor en couches minces (304) étant connecté:
- à la ligne de réinitialisation (400) par sa grille,
- au drain du premier transistor en couches minces (302) par sa source et à la ligne de polarisation (20) de son unité de pixel (1),
- à la ligne de sortie de tension de polarisation (24) par son drain.

14. Appareil de détection d'image radiographique selon l'une quelconque des revendications précédentes, **caractérisé en ce que** la multitude d'unités de pixel (1) est arrangée dans une multitude de lignes (60) et de colonnes (70), l'appareil de détection d'image comprenant une multitude des lignes de pilotage (40) et une multitude des lignes de lecture (50), chaque ligne de pilotage (40) étant connectée à une multitude d'unités de pixel (1) d'une seule ligne et chaque ligne de lecture (50) étant connectée à une multitude d'unités de pixel (1) d'une seule colonne et l'ensemble correspondant des unités de pixel (1) comprenant un ensemble d'unités de pixel (1) d'une seule colonne (70) .

15. Appareil de détection d'image radiographique selon la revendication 14, si dépendante de la revendication 12, **caractérisé en ce que**
- la ligne de réinitialisation (400) des unités de pixel (1) d'une première ligne (60) est formée par la ligne de pilotage (40) des unités de pixel (1) d'une ligne suivante (60) d'unités de pixel (1),
- que le commutateur de réinitialisation de sortie (300) des unités de pixel (1) de la première ligne (60) comprend un premier transistor en couches minces (302) et un deuxième transistor en couches minces (304),
- ledit premier transistor en couches minces (302) étant connecté:
- à la ligne de réinitialisation (400) par sa grille inversée ou à la ligne de pilotage (40) de la première ligne (60) d'unités de pixel (1) par sa grille,
- à la sortie (106) de l'amplificateur opérationnel (100) par sa source,
- à la ligne de polarisation (20) de son unité de pixel (1) par son drain,
- ledit deuxième transistor en couches minces (304) étant connecté:
- à la ligne de réinitialisation (400) par sa grille,
- au drain du premier transistor en couches minces (302) et à la ligne de polarisation (20) de son unité de pixel (1) par sa source,
- à la ligne de sortie de tension de polarisation (24) par son drain.
